# FASCICULE DE BREVET EUROPEEN

(11) **EP 2 762 434 B1**
(45) Date de publication et mention de la délivrance du brevet: **03.03.2021**
(21) Numéro de dépôt: 14150404.3
(22) Date de dépôt: 08.01.2014
(51) Int. Cl.: B66B 5/04, F16D 27/00, F16D 59/02, F16D 67/06, G05D 13/10, E02B 7/20, F16D 121/22, F16D 127/00

(54) **Système de commande et de limitation de vitesse pour contrôler le mouvement d'un organe mobile**
System zur Geschwindigkeitssteuerung und -begrenzung für die Bewegungskontrolle eines mobilen Elements
System for controlling and limiting speed for monitoring the movement of a movable member

(30) Priorité: 08.01.2013 FR 1350146
(43) Date de publication de la demande: 06.08.2014
(73) Titulaire: EIFFAGE Construction Métallique, 92700 Colombes (FR)
(72) Inventeur: Christensen, Eloi, 75009 Paris (FR); Chaudier, Joël, 75012 Paris (FR)
(74) Mandataire: Plasseraud IP

(56) Documents cités:
- JP-A- 2004 176 450
- JP-A- 2011 246 990
- US-A- 3 257 104
- US-A- 5 890 565

## Description

La présente invention est relative aux systèmes de commande et de limitation de vitesse pour contrôler le mouvement d'un organe mobile.

Plus particulièrement, l'invention concerne un dispositif de limitation de vitesse dans une chaine cinématique de commande motorisée pour contrôler le mouvement d'un organe mobile, en particulier soumis à la gravité ou à la pression hydraulique. L'invention vise en particulier le comportement du système en cas d'indisponibilité temporaire de l'alimentation d'énergie motrice, notamment électrique, en particulier le besoin d'affaler l'organe mobile jusqu'à une position de sécurité sans risque de dommages.

Il est connu dans l'art antérieur du document JP 2011-246990 de placer un frein centrifuge en prise avec la chaine cinématique pour limiter la vitesse de déplacement de l'organe mobile. Toutefois, le seuil de vitesse auquel intervient effectivement le frein centrifuge doit nécessairement être plus élevé que les valeurs de vitesses nominales engendrées par l'organe moteur afin que le frein centrifuge ne gêne pas le fonctionnement normal du système lorsque l'alimentation d'énergie est présente.

Ceci nécessite de dimensionner la chaine cinématique pour des valeurs de vitesses correspondant au seuil de déclenchement du frein centrifuge, pour des cas d'utilisation qui restent rares. De plus, lorsque le frein centrifuge est en prise en permanence avec la chaine cinématique, cela augmente l'inertie ce qui n'est pas souhaitable.

Il est donc apparu un besoin d'optimiser ce genre de système pour dimensionner la chaine cinématique au plus juste, tout en conservant la fonction d'affalage de l'organe mobile jusqu'à une position de sécurité sans risque de dommages en cas de manque d'alimentation énergétique. En particulier, il est intéressant d'avoir la possibilité de rajouter un dispositif d'affalage sur une chaîne cinématique existante non dimensionnée en conséquence, et cela sans avoir à redimensionner la chaîne cinématique ou à remplacer des éléments de cette dernière.

A cet effet, l'invention propose un système de commande et de limitation de vitesse pour contrôler le mouvement d'un organe mobile soumis à la gravité et/ou à une pression hydraulique d'après la revendication 1.

Grâce à ces dispositions, le frein centrifuge n'est pas couplé à la chaine cinématique dans le cas normal de présence d'alimentation énergétique ; mais si l'alimentation énergétique vient à être interrompue, le frein centrifuge est automatiquement mis en prise avec la chaine cinématique grâce à l'embrayage à manque d'énergie, et on peut affaler l'organe mobile à vitesse limitée jusqu'à une position de sécurité sans risque de dommages.

Dans des modes de réalisation du procédé selon l'invention, on peut éventuellement avoir recours en outre à l'une et/ou à l'autre des dispositions suivantes :
- la vitesse nominale de l'organe moteur correspond à une première vitesse V1 sur la portion de prise, et le frein centrifuge présente une vitesse d'activation du freinage correspondant à une deuxième vitesse V2 sur la portion de prise, et V2<V1 ; moyennant quoi le dimensionnement de la chaine cinématique est basé sur la vitesse nominale du moteur et non pas sur une vitesse plus rapide qui correspondrait à une intervention du frein centrifuge ; ainsi, le dispositif est donc tout à fait adapté pour être intégré a posteriori sur une chaîne cinématique existante sans impact sur le dimensionnement initial ;
- l'embrayage est ouvert par apport d'énergie au moins lorsque une commande de rotation est appliquée à l'organe moteur ; de sorte que le frein centrifuge est désaccouplé et n'intervient pas lors la commande normale de l'organe moteur ;
- l'organe mobile est une vanne/clapet d'un ouvrage hydraulique de type retenue d'eau ; moyennant quoi l'ouvrage peut être sauvegardé en cas de panne d'alimentation en énergie notamment électrique notamment dans le cas où la position de sécurité est une position basse ;
- le dispositif de limitation de mouvement est agencé à proximité de l'organe moteur ; de sorte que le dimensionnement dynamique peut être optimisé et les sollicitations de la chaîne cinématique peuvent être limitées ;
- la source d'énergie est l'énergie électrique, l'organe moteur étant un moteur électrique et l'embrayage étant un embrayage à manque de courant; ce qui permet d'utiliser des composants électro-mécaniques relativement standard ;
- le frein centrifuge et l'embrayage sont disposés coaxialement ; ce qui permet d'optimiser l'intégration mécanique et d'obtenir une taille modérée ;
- l'axe du frein centrifuge peut être perpendiculaire à l'axe de l'organe moteur ; moyennant quoi une configuration géométrique alternative est proposée ;
- selon l'invention la chaîne cinématique de transmission est équipée en outre d'un frein à manque de courant; de sorte que l'organe mobile peut être immobilisé par défaut automatiquement en cas de perte de courant ;
- un réducteur auxiliaire est interposé entre la portion de prise et l'embrayage ; de sorte que le rapport des vitesses entre la portion de prise et le frein centrifuge peut être optimisé.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue générale d'un système de commande selon un mode de réalisation de l'invention,
- les figures 2 et 2a montrent de façon plus détaillée le dispositif de limitation de vitesse intégré au système de la figure 1,
- la figure 3 montre une variante du système de commande de la figure 1, et
- la figure 4 représente un diagramme des vitesses.

Sur les différentes figures, les mêmes références désignent des éléments identiques ou similaires.

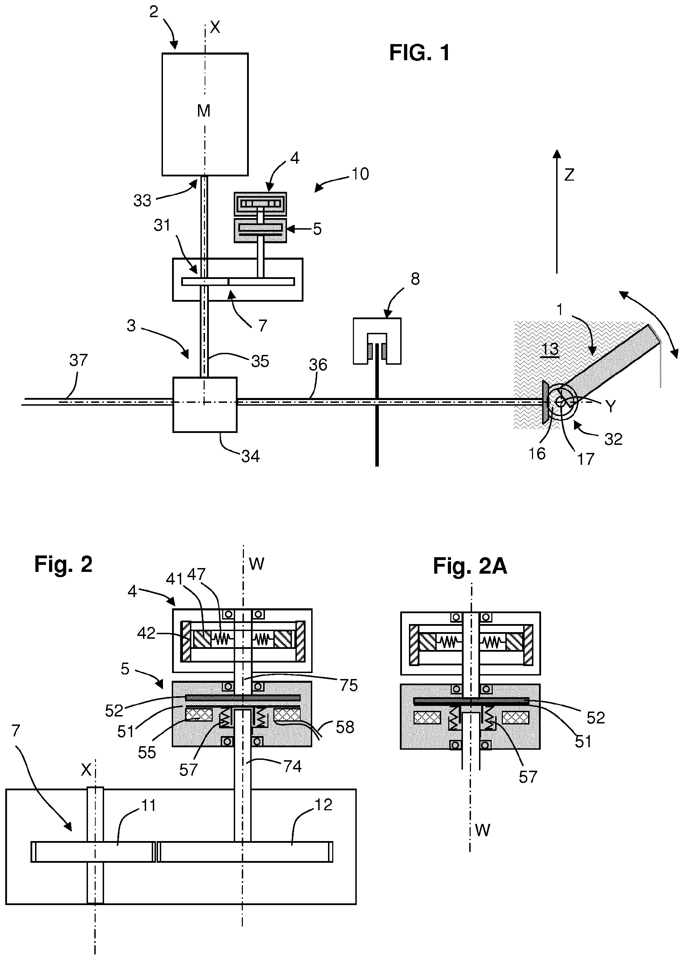

La figure 1 représente un exemple de système de commande et de limitation des mouvements pour entrainer et contrôler le mouvement d'un organe mobile **1** selon une forme de réalisation de l'invention.

L'organe mobile **1** en question peut être une porte (ou une 'vanne' ou un 'clapet') de retenue d'eau, rappelée par gravité ou pression hydraulique vers une position basse. Dans cet exemple, la verticale est orientée selon **Z** et l'eau **13** est retenue par la 'vanne-clapet' 1 en temps normal ; dans des circonstances particulières, on peut avoir besoin d'abaisser la 'vanne-clapet' pour laisser déborder l'eau qui alors passe au-dessus de la 'vanne-clapet'.

L'organe mobile **1** en question peut aussi être une cage d'ascenseur ou de monte-charges, le crochet d'un appareil de levage (grue, pont roulant, etc...) avec sa charge embarquée, la plateforme d'un pont élévateur, ou toute autre entité mobile soumise à l'action de la pesanteur.

Une chaîne cinématique **3** (qu'on peut aussi appeler 'transmission') est interposée entre l'organe moteur 2 et l'organe mobile 1 et comprend généralement des arbres tournants et des réductions de vitesse. Elle est engagée directement à une de ses extrémités **32** avec le mouvement de montée et descente de l'organe mobile **1,** par exemple au moyen d'un engrenage final **16,** ou d'un tambour à câbles, ou encore d'un pignon et chaîne de suspension. Dans l'exemple illustré, le mouvement de l'organe mobile **1** est une rotation autour d'un axe **Y.**

Il faut remarquer que la chaîne cinématique 3 en question est la seule liaison cinématique entre l'organe moteur et l'organe mobile ; il n'est pas exclu qu'elle comprenne un certain niveau de redondance bien que l'exemple représenté ne comprend qu'une seule liaison entre l'organe moteur et l'organe mobile 1.

A l'extrémité opposée **33** de la chaîne cinématique, celle-ci est engagée avec le rotor d'un organe moteur **2,** le plus souvent un moteur électrique **M,** mais qui peut aussi être un moteur hydraulique ou pneumatique. Entre les deux extrémités 32,33, la chaîne cinématique peut comprendre un ou plusieurs arbres tournants **35,36,** et le cas échéant un ou plusieurs réducteurs **34** et le cas échéant un ou plusieurs renvois d'angle.

Dans le cas d'une porte d'écluse ou de retenue d'eau, généralement de dimension conséquente, celle-ci est montée oscillante sur un arbre long **17** et on entraine le mouvement de la porte simultanément aux deux extrémités de celle-ci ; par conséquent, dans ce cas, la chaîne cinématique peut comprendre deux branches 36,37 en sortie d'un renvoi à fonction 'T' (renvoi double 34).

Dans l'exemple illustré, l'organe moteur est un moteur électrique classique ayant une vitesse de rotation nominale de 1500 trs/min sous 220/380 volts.

L'arbre **35** tourne lui aussi à ce régime lorsque le moteur est activé. Le réducteur **34** introduit une réduction par exemple de 50, et donc l'arbre 36 tourne à 30 trs/min. La réduction finale **32** introduit par exemple une réduction de 10, et donc la porte tourne à 0,05 tour/sec, soit 18 deg/sec, ou encore 3 trs/min.

Dans un sens, i.e. lorsque la charge monte, on est à l'encontre de la gravité, dans l'autre sens on accompagne la gravité ou même on freine avec l'organe moteur.

Avantageusement, la chaîne cinématique **3** comprend un dispositif de limitation de vitesse **10** qui vient en prise avec la chaîne cinématique sur une portion de prise **31** d'un arbre tournant de la chaîne cinématique (ici l'arbre 35). La portion de prise pourrait tout aussi bien être agencée sur un autre arbre de la chaîne cinématique, ou même directement sur le rotor du moteur.

Le dispositif de limitation de vitesse 10 est engagé sur la chaîne cinématique 3 au niveau de ladite portion de prise 31 au moyen d'un engrènement **7** qui comprend un pignon **11** qui est solidaire en rotation de l'arbre 35 et engrène sur un autre pignon **12,** ce dernier étant montré sur un premier arbre **74.** Sur l'axe **W** de cet autre pignon 12, le dispositif de limitation de vitesse **10** comprend un frein centrifuge **4** qui sera décrit en détails plus loin, et un embrayage **5** à manque de courant, interposé entre le frein centrifuge 4 et la portion de prise 31.

L'embrayage à manque de courant peut être plus généralement un embrayage à manque d'énergie 5 par exemple un embrayage multidisques hydraulique qui est fermé en l'absence de pression d'huile.

Dans la version électrique telle que représentée, il s'agit d'un embrayage à manque de courant, qui comprend un premier disque **51** solidarisé en rotation avec le premier arbre **74,** et mobile axialement entre deux positions axiales, et un deuxième disque **52** situé en vis-à-vis, fixe axialement, et solidaire en rotation du frein centrifuge 4 via un deuxième arbre **75,** centré sur l'axe **W,** coaxial au premier arbre **74.**

L'interface entre le premier disque 51 et le premier arbre **74** peut utiliser un montage à cannelures s'étendant axialement.

Dans la première position axiale du premier disque **51,** comme illustré à la figure 2A, celui-ci est au contact du deuxième disque **52,** et ils sont par conséquent solidaires en rotation autour de **W.** Un système de rappel élastique à ressort rappelle le premier disque **51** vers cette première position axiale.

Avantageusement on utilise comme moyen de rappel élastique des ressorts **57** qui tournent avec le premier arbre **74.**

Dans la deuxième position axiale du premier disque **51,** comme illustré à la figure 2, le premier disque 51 n'est pas au contact du deuxième disque **52** et donc le frein centrifuge n'est plus solidaire de la chaine cinématique.

En effet, l'embrayage à manque de courant comprend un dispositif d'électro-aimant **55** agencé de préférence en position non tournante. Ce dispositif, lorsqu'il est excité électriquement, attire le premier disque 51 vers sa deuxième position. Ce dispositif comprend de préférence une pluralité d'électroaimants répartis de façon circonférentielle autour de l'axe **W** et agencés axialement à proximité du premier disque **51** et alimentés par des fils **58.**

Par conséquent, lorsque les électro-aimants sont électriquement excités, alors les premier et deuxième arbres 74,75 peuvent tourner indépendamment, et il en résulte que le frein centrifuge est découplé des mouvements de la chaine cinématique. Inversement, en cas de manque de courant (interruption de l'alimentation électrique), les premier et deuxième disques 51,52 reviennent en contact sous l'effet des ressorts 57, ainsi le frein centrifuge est automatiquement couplé avec la chaine cinématique au travers de l'embrayage et de l'engrènement **7.**

Le frein centrifuge **4** comprend des éléments déplaçables **41** (aussi appelés 'masselottes'), déplaçables radialement sous l'effet de la force centrifuge et rappelés par des ressorts **47** en direction de l'axe. Au-delà d'une certaine vitesse, les éléments déplaçables 41 viennent au contact d'une zone de friction intérieure annulaire **42** fixe en vis-à-vis ce qui produit un effet de freinage. Les éléments déplaçables **41** sont guidés dans un rotor du frein pour se déplacer principalement radialement et sont liés de façon circonférentielle audit rotor pour freiner le second arbre 75 par rapport au carter fixe du frein.

Il faut remarquer que dans le cas normal d'utilisation, à savoir lorsque l'alimentation en énergie est disponible, l'embrayage peut être ouvert et le frein centrifuge non couplé, en particulier lorsque le moteur **2** est commandé ou même lorsque le moteur est sous tension : il n'y a donc quasiment pas de perte par frottements du fait de la présence du dispositif de limitation de vitesse 10. Il n'y a pas d'inertie de rotation supplémentaire non plus.

Avantageusement, la vitesse d'intervention du frein centrifuge correspond à une vitesse **V2** sur l'arbre **35.** Par ailleurs la vitesse nominale du moteur correspond à une vitesse **V1** sur l'arbre **35.** Avantageusement V2 est inférieure à V1, par exemple la valeur de V2 peut être choisie entre 1200 et 1400 trs/min pour une vitesse nominale équivalente de V1 égale à 1500 trs/min.

En conséquence de quoi la chaine cinématique peut être dimensionnée selon V1, voire 110 % de V1, notamment en ce qui concerne les couples et les sollicitations dynamiques dimensionnants.

V2 peut être aussi choisi beaucoup plus petit que V1, afin d'obtenir une arrivée douce sur la butée basse, par exemple le tiers ou le quart de V1.

La chaîne cinématique comprend en outre un frein **8** à manque de courant, situé de préférence sur l'arbre lent au plus près de l'organe mobile 1 sur la chaine cinématique, de manière à pouvoir intervenir en cas de défaillance d'un quelconque des éléments situés en amont de ce frein. Ce frein 8 permet d'immobiliser l'organe mobile **1** en cas de perte de courant, et ce de manière très fiable et très rapide.

Ce frein à manque de courant 8 est un organe tout à fait distinct du dispositif de limitation de vitesse 10. En effet, le frein à manque de courant est de préférence disposé au plus près de l'organe mobile, alors que le dispositif de limitation de vitesse 10 est de préférence disposé au plus près du moteur 2, en d'autres termes ils sont disposés respectivement à l'une et l'autre des extrémités de la chaîne cinématique 3. Ce frein à manque de courant 8 est serré dès l'alimentation électrique générale n'est plus disponible. Mais une batterie électrique de secours est prévue pour pouvoir desserrer ce frein de sécurité, en particulier pour pouvoir affaler la charge ou l'organe mobile jusqu'à une position de sécurité, sous le contrôle du dispositif de limitation de vitesse 10 susmentionné.

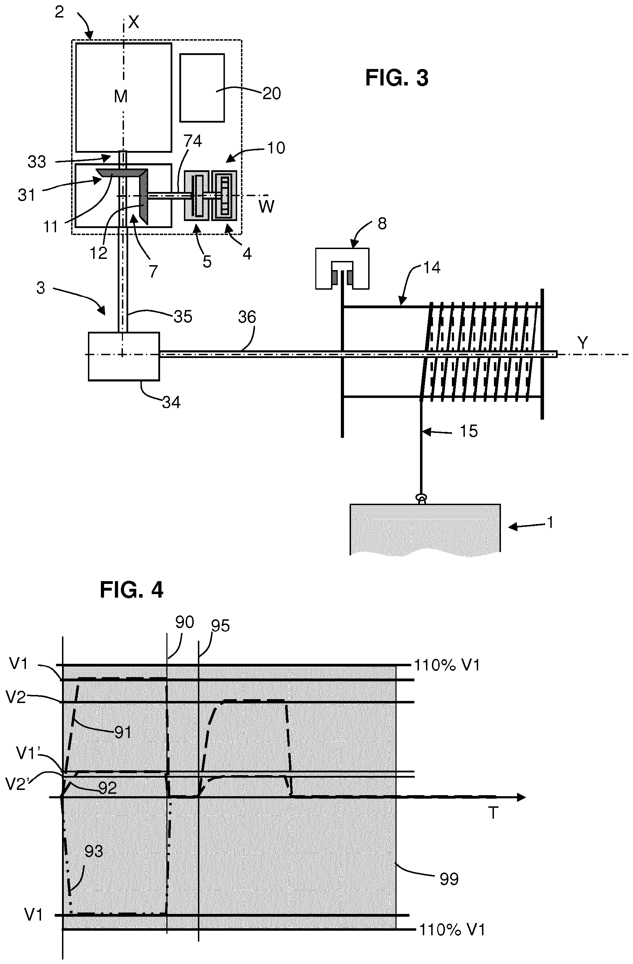

Sur la figure 3, une variante de configuration consiste à agencer le dispositif de limitation de vitesse **10** de façon perpendiculaire à la portion de prise. L'axe W est alors perpendiculaire à l'axe X de l'arbre 35. On peut alors intégrer un module de commande 20 avec le dispositif de limitation de vitesse 10 et le moteur, ce qui donne un avantage de compacité.

A l'inverse, dans le premier mode illustré à la figure 1, l'axe **W** est parallèle à l'axe **X,** ce qui est une alternative d'intégration mécanique.

Selon la variante représentée, la chaîne cinématique comporte un tambour **14** sur lequel un filin ou câble **15** est enroulé, l'organe mobile étant ici formé par une charge à soulever accrochée au filin 15.

Selon un aspect avantageux, le dispositif de limitation de vitesse **10** est agencé à proximité du moteur **2,** sur l'arbre rapide. En effet, la majorité de l'énergie cinétique de la chaine cinématique en rotation est stockée dans le rotor du moteur, et il est avantageux d'avoir un 'chemin' court entre le moteur et le dispositif de limitation de vitesse. Cela favorise aussi le dimensionnement en couple au plus juste.

Le dispositif de limitation de vitesse **10** peut être conçu comme un kit 'add-on', c'est-à-dire comme un équipement qui peut être inséré en série à la sortie du moteur électrique, sur une chaine cinématique déjà conçue ou même déjà installée. L'intérêt est alors de limiter au maximum les études (pas de redimensionnement de la chaîne cinématique existante) et la durée d'intervention sur site (intégration rapide d'un organe complet et compact immédiatement opérationnel).

En cas d'interruption temporaire de l'alimentation électrique d'un ouvrage hydraulique sur un fleuve et d'un accroissement du débit du fleuve, il faut pouvoir protéger l'intégrité mécanique de l'ouvrage en abaissant une vanne porte ou clapet pour augmenter le débit de déversement d'eau par-dessus la vanne. Ceci peut être obtenu en toute sécurité grâce à l'affalage sous le contrôle du dispositif de limitation de vitesse ; de préférence cela est opéré à une vitesse inférieure à la vitesse nominale.

En référence à la figure 4, il est représenté différents chronogrammes illustrant le comportement en cas de perte d'alimentation en énergie. Les courbes 91 et 92 (91 montre la vitesse de l'arbre rapide et 92 la vitesse de l'arbre lent) représentent une descente de l'organe mobile dans un premier temps sous le contrôle de l'organe moteur jusqu'à la rupture d'alimentation intervenant au moment 90.

À ce moment-là le frein à manque de courant 8 intervient et immobilise très rapidement l'organe mobile 1. Le frein centrifuge 4 est lui aussi à ce moment accouplé automatiquement à la chaîne cinématique mais sans intervention effective à vitesse nulle. Au moment **95** où le frein 8 est desserré, alors la descente de l'organe mobile reprend sous le contrôle du frein centrifuge 4, à une vitesse **V2** de l'arbre rapide inférieur à la vitesse **V1** de l'arbre rapide. De même la vitesse de déplacement **V2'** de l'arbre lent est alors plus faible que la vitesse de déplacement **V1'** de l'arbre lent sous le contrôle de l'organe moteur, qui est la vitesse de fonctionnement nominal.

Si le mouvement précédent l'interruption de l'alimentation était une montée de l'organe mobile comme représenté sur la courbe **93,** cela ne modifie pas le comportement du système après la coupure d'alimentation qui est identique à l'exemple précédent ; dans les deux cas on peut contrôler le déplacement de l'organe mobile vers une position de sécurité basse sans risque de dommages.

À titre d'exemple, même dans le cas où le frein 8 à manque de courant n'est pas présent, dès lors que l'alimentation en énergie est interrompue, l'embrayage **5** couple immédiatement et automatiquement le frein centrifuge à la chaîne cinématique et la vitesse de déplacement de l'organe mobile rejoint la vitesse V2' (V2 pour l'arbre rapide) sans délai, moyennant quoi la chaîne cinématique reste toujours dans son domaine de dimensionnement **99** limité par la vitesse nominale V1 dans le sens positif et dans le sens négatif comme illustré la figure 4 ; il faut noter toutefois que l'homme de l'art dimensionne généralement la chaîne cinématique à 110 % de la valeur nominale V1.

Le rapport de réduction de l'engrènement **7** peut valoir 1 (pignons **11** et **12** de même taille) ou peut être différent de 1 afin d'adapter au mieux les vitesses respectives du frein centrifuge et de l'arbre 35 de la portion de prise 31.

## Revendications

1. Système de commande et de limitation de vitesse pour contrôler le mouvement d'un organe mobile (1) soumis à la gravité et/ou à une pression hydraulique, comprenant :
- un organe moteur (2),
- une chaîne cinématique (3) interposée entre l'organe moteur (2) et l'organe mobile (1), et reliant l'organe moteur (2) à l'organe mobile (1), et équipée en outre un frein à manque de courant (8) ;
- un dispositif de limitation de vitesse (10), apte à limiter la vitesse de déplacement de l'organe mobile (1), en prise avec la chaîne cinématique (3) sur une portion de prise (31) d'un arbre tournant de la chaîne cinématique, le dispositif de limitation de vitesse (10) comprenant :
- un frein centrifuge (4), **caractérisé en ce que** le dispositif de limitation de vitesse (10) comprend en plus
- un embrayage à manque d'énergie (5), interposé entre le frein centrifuge (4) et la portion de prise (31), l'embrayage étant rappelé à l'état fermé en cas de manque d'énergie, pour mettre en engagement le frein centrifuge avec la chaîne cinématique (3), afin de limiter la vitesse de déplacement de l'organe mobile (1) entraîné par la gravité et/ou la pression hydraulique.

2. Système selon la revendication 1, dans lequel la vitesse nominale de l'organe moteur correspond à une première vitesse (**V1**) sur la portion de prise, et le frein centrifuge présente une vitesse d'activation du freinage correspondant à une deuxième vitesse (**V2**) sur la portion de prise, et la deuxième vitesse est inférieure à la première vitesse (**V1**).

3. Système selon l'une des revendications 1 à 2, dans lequel l'embrayage (5) est ouvert par apport d'énergie au moins lorsque une commande de rotation est appliquée à l'organe moteur (2).

4. Système selon l'une des revendications 1 à 3 dans lequel l'organe mobile (1) est une vanne/clapet d'un ouvrage hydraulique de type retenue d'eau.

5. Système selon l'une des revendications 1 à 4 dans lequel le dispositif de limitation de vitesse (10) est agencé à proximité de l'organe moteur (2).

6. Système selon l'une des revendications 1 à 5 dans lequel la source d'énergie est l'énergie électrique, l'organe moteur (2) est un moteur électrique et l'embrayage (5) est un embrayage à manque de courant.

7. Système selon l'une des revendications 1 à 6 dans lequel le frein centrifuge (4) et l'embrayage sont disposés coaxialement.

8. Système selon l'une des revendications 1 à 7 dans lequel l'axe du frein centrifuge (W) est agencé perpendiculairement à l'axe de l'organe moteur (X).

9. Système selon l'une des revendications 1 à 8 dans lequel un réducteur auxiliaire (7) est interposé entre la portion de prise (31) et l'embrayage (5).

## Patentansprüche

1. System zur Geschwindigkeitssteuerung und -begrenzung für die Bewegungskontrolle eines mobilen Elements (1), das der Schwerkraft und/oder einem hydraulischen Druck unterworfen ist, aufweisend:
- ein Motorelement (2),
- eine kinematische Kette (3), die zwischen dem Motorelement (2) und dem mobilen Element (1) angeordnet ist und das Motorelement (2) mit dem mobilen Element (1) verbindet und außerdem mit einer Strommangelbremse (8) ausgestattet ist;
- eine Geschwindigkeitsbegrenzungsvorrichtung (10), die fähig ist, die Verschiebungsgeschwindigkeit des mobilen Elements (2) zu begrenzen, und an einem Eingriffsabschnitt (31) einer Rotationswelle der kinematischen Kette im Eingriff mit der kinematischen Kette (3) ist,
wobei die Geschwindigkeitsbegrenzungsvorrichtung (10) aufweist:
- eine Fliehkraftbremse (4),
**dadurch gekennzeichnet, dass** die Geschwindigkeitsbegrenzungsvorrichtung (10) desweiteren aufweist:
- eine Energiemangelkupplung (5), die zwischen der Fliehkraftbremse (4) und dem Eingriffsabschnitt (31) angeordnet ist, wobei im Falle eines Energiemangels die Kupplung in den geschlossenen Zustand zurückgestellt wird, um die Fliehkraftbremse mit der kinematischen Kette (3) in Eingriff zu bringen, um die Verschiebungsgeschwindigkeit des von der Schwerkraft und/oder dem hydraulischen Druck angetriebenen organischen Elements (1) zu begrenzen.

2. System nach Anspruch 1, in welchem die nominale Geschwindigkeit des Motorelements einer ersten Geschwindigkeit (V1) an dem Eingriffsabschnitt entspricht, und die Fliehkraftbremse eine Aktivierungsgeschwindigkeit der Bremsung hat, die einer zweiten Geschwindigkeit (V2) an dem Eingriffsabschnitt entspricht, und die zweite Geschwindigkeit kleiner als die erste Geschwindigkeit (V1) ist.

3. System nach einem der Ansprüche 1 bis 2, in welchem die Kupplung (5) durch Energiezufuhr geöffnet wird, zumindest wenn ein Rotationsbefehl an dem Motorelement (2) anliegt.

4. System mach einem der Ansprüche 1 bis 3, in welchem das mobile Element (1) ein Ventil/ Klappe eines hydraulischen Bauwerks vom Typ Wasserrückhaltung ist.

5. System nach einem der Ansprüche 1 bis 4, in welchem die Geschwindigkeitsbegrenzungsvorrichtung (10) in der Nähe des Motorelements (2) angeordnet ist.

6. System nach einem der Ansprüche 1 bis 5, in welchem die Energiequelle elektrische Energie ist, das Motorelement ein Elektromotor ist und die Kupplung (5) eine Strommangelkupplung ist.

7. System nach einem der Ansprüche 1 bis 6, in welchem die Fliehkraftbremse (4) und die Kupplung koaxial angeordnet sind.

8. System nach einem der Ansprüche 1 bis 7, in welchem die Achse der Fliehkraftbremse (W) senkrecht zur Achse des Motorelements (X) angeordnet ist.

9. System nach einem der Ansprüche 1 bis 8, in welchem ein Hilfsuntersetzungsgetriebe (7) zwischen dem Eingriffsabschnitt (31) und der Kupplung (5) angeordnet ist.

## Claims

1. Speed control and limitation system for controlling the movement of a movable member (1) subjected to gravity and/or to hydraulic pressure, comprising:
- a driving member (2),
- a kinematic chain (3) interposed between the driving member (2) and the movable member (1) and connecting the driving member (2) to the movable member (1), and further equipped with a fail-safe brake (8),
- a speed limiting device (10), able to limit the movement speed of the movable member (1), engaged with the kinematic chain (3) on an engagement portion (31) of a rotating shaft of the kinematic chain, the speed limiting device (10) comprising:
- a centrifugal brake (4),
**characterized in that** the speed limiting device (10) further comprises
- a fail-safe clutch (5) interposed between the centrifugal brake (4) and the engagement portion (31), the clutch being returned to the engaged state in the event of a lack of energy, in order to engage the centrifugal brake with the kinematic chain (3) so as to limit the movement speed of the movable member (1) driven by gravity and/or hydraulic pressure.

2. System according to claim 1, wherein the nominal speed of the driving member corresponds to a first speed (**V1**) on the engagement portion, and the centrifugal brake has a braking activation speed corresponding to a second speed (**V2**) on the engagement portion, and the second speed is less than the first speed (**V1**).

3. System according to one of claims 1 to 2, wherein the clutch (5) is disengaged by the input of energy, at least when rotation control is applied to the driving member (2).

4. System according to one of claims 1 to 3, wherein the movable member (1) is a valve/check valve of a water-retaining hydraulic structure.

5. System according to one of claims 1 to 4, wherein the speed limiting device (10 is arranged in proximity to the driving member (2).

6. System according to one of claims 1 to 5, wherein the energy source is electrical energy, the driving member (2) is an electric motor, and the clutch (5) is a fail-safe clutch.

7. System according to one of claims 1 to 6, wherein the centrifugal brake (4) and the clutch are arranged coaxially.

8. System according to one of claims 1 to 7, wherein the axis of the centrifugal brake (W) is arranged perpendicularly to the axis of the driving member (X).

9. System according to one of claims 1 to 8, wherein an auxiliary reduction gear (7) is interposed between the engagement portion (31) and the clutch (5).
